# EUROPÄISCHE PATENTSCHRIFT

(11) **EP 2 181 914 B1**
(45) Veröffentlichungstag und Bekanntmachung des Hinweises auf die Patenterteilung: **21.12.2011**
(21) Anmeldenummer: 08018958.2
(22) Anmeldetag: 30.10.2008
(51) Int. Cl.: B62D 31/02, B62D 33/04, B61D 17/04

(54) **Gerippesäule für ein Gerippe eines Grossraumfahrzeugs**
Cage column for a cage on a large-scale vehicle
Colonne d'armature pour une armature d'un grand véhicule

(43) Veröffentlichungstag der Anmeldung: 05.05.2010
(73) Patentinhaber: Wirth, Klaus-Dieter, 89173 Lonsee-Luizhausen (DE)
(72) Erfinder: Wirth, Klaus-Dieter, 89173 Lonsee-Luizhausen (DE)
(74) Vertreter: Cremer & Cremer

(56) Entgegenhaltungen:
- WO-A-2004/058553
- CA-A1- 2 480 943
- DE-A1- 4 142 258
- FR-A- 726 050
- FR-A- 1 310 650

## Beschreibung

Die Erfindung betrifft eine Gerippesäule für ein Gerippe eines Großraumfahrzeugs, insbesondere eines Omnibusses.

Derartige Gerippesäulen sind dabei beispielsweise bereits aus der DE 199 03 724 A1 als bekannt zu entnehmen und dienen als seitliche Bauelemente zum Aufbau und zur Versteifung eines Gerippes, welches üblicherweise als Hauptrahmen einer selbsttragenden Karosserie eines Großraumfahrzeugs wie beispielsweise eines Omnibusses dient. Die Gerippesäulen werden dabei als Hohlprofile ausgebildet und bestehen aus einer U-förmigen Halbschale sowie einem deren offene Profilseite übergreifenden Schließblech.

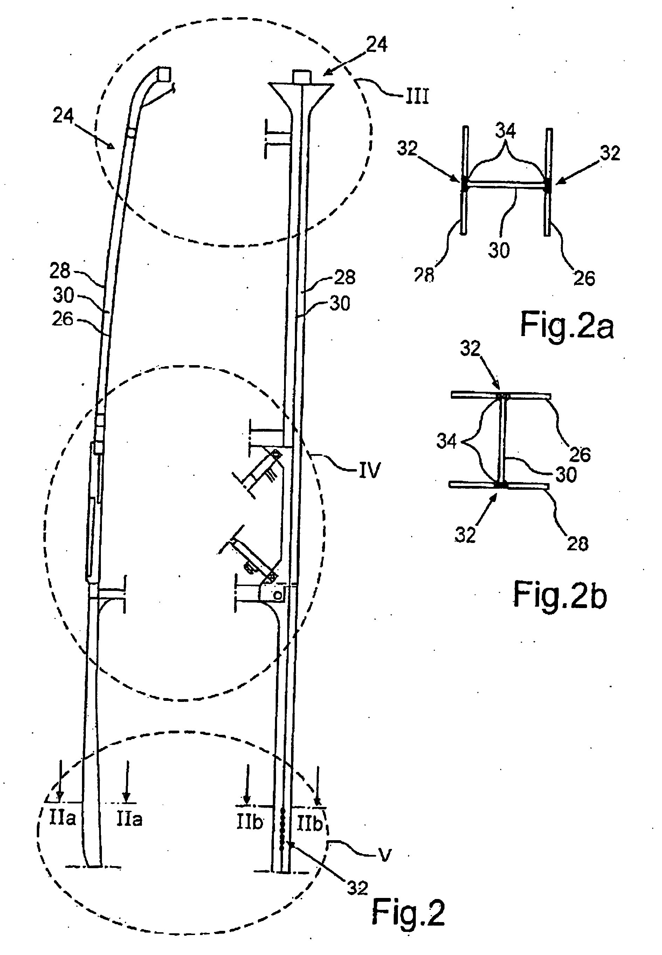

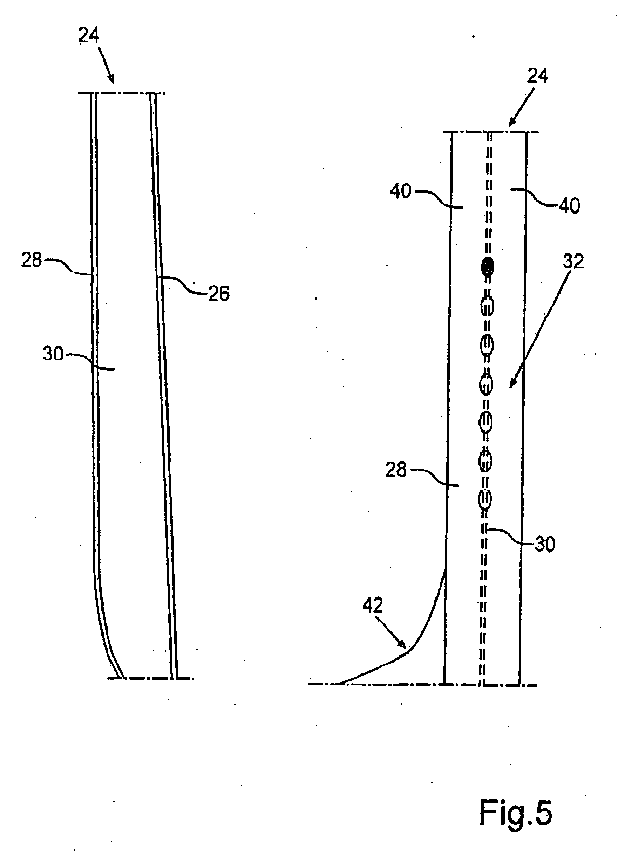

Wie ein Traggestell mit U-artigen oder I-artigen Trägern zusammengefügt werden kann, lässt sich unter anderem der gattungsbildenden FR 1 310 650 A (Patentinhaberin: Carindal; Anmeldetag: 18.10.1961) entnehmen, denn dort wird, wie zum Beispiel in Fig. 2 gezeigt, mit verschraubbaren Anschlagswinkeln gearbeitet. Eine ähnliche Verbindungstechnik lässt sich in Bezug auf Doppel-T-Profile der FR 726 050 A (Patentinhaberin: Société Driguet Frères; Anmeldetag: 09.11.1931) entnehmen, die mit einwandigen Anschlagswinkeln, in der Druckschrift mit "A" bezeichnet, operiert. Die Verbindung von I-Profilen für Anhänger von Lastkraftwagen wird zudem in der CA 2 480 943 A1 (Anmelderin: Prevost Car Inc.; Anmeldetag: 07.09.2004) behandelt. Die Anschlagswinkel zur Bildung eines fächerartigen Leiterrahmens sind, wie in Fig. 5a der CA 2 480 943 A1 gezeigt, bogenartig ausgestaltet. Für jede einzelne Verbindung muss somit ein zusätzlich das Gewicht steigernder Anschlagswinkel, wie auch immer gestaltet, in den Übergangsbereichen von einem Profil zum nächsten gemäß dieser Veröffentlichungen verwendet werden.

Als nachteilig an den bekannten Gerippesäulen ist dabei der Umstand anzusehen, dass diese bei einem relativ hohen Rohbaugewicht nur eine vergleichsweise geringe Biegefestigkeit aufweisen.

Aufgabe der vorliegenden Erfindung ist es daher, eine Gerippesäule der eingangs genannten Art zu schaffen, welche eine erhöhte Biegefestigkeit bei gleichem oder geringerem Rohbaugewicht besitzt, und welche mit unterschiedlichen Konturverläufen hergestellt werden kann.

Die Aufgabe wird erfindungsgemäß durch eine Gerippesäule mit den Merkmalen des Patentanspruchs 1 gelöst. Vorteilhafte Ausgestaltungen mit zweckmäßigen und nicht-trivialen Weiterbildungen der Erfindung sind in den Unteransprüchen angegeben.

Eine Gerippesäule, welche eine erhöhte Biegefestigkeit bei gleichem oder geringerem Rohbaugewicht besitzt, ist dadurch geschaffen, dass diese im Wesentlichen als I-Profil ausgebildet ist und ein Innenkontur- sowie ein Außenkonturteil umfasst, welche über ein Mittelstegteil miteinander verbunden sind. Mit anderen Worten ist die Gerippesäule im Gegensatz zum Stand der Technik nicht als Hohl- bzw. IHU-Profil, sondern als I- bzw. Doppel-T-Profil ausgebildet, wodurch neben der erhöhten Biegefestigkeit und dem geringeren Rohbaugewicht zusätzlich eine flexiblere Konturgestaltung des Gerippes des Großraumfahrzeugs bei reduzierten Herstellungskosten ermöglicht ist.

Gemäß der Erfindung ist vorgesehen, dass das Innenkontur- und/oder das Außenkontur- und/oder das Mittelstegteil mittels eines thermischen Trennverfahrens, insbesondere eines Laserschneidverfahrens, aus einer Blechtafel ausgeschnitten ist. Dies ermöglicht eine besonders präzise, schnelle und flexible Ausgestaltung der Gerippesäule, wodurch weitere Kostensenkungen erzielt werden.

In einer vorteilhaften Ausgestaltung der Erfindung ist vorgesehen, dass das Innenkontur- und/oder das Außenkonturteil einen Aufnahmebereich und/oder eine Auflagefläche zum Anordnen eines Dichtungselements, insbesondere eines Dichtgummis, umfasst. Auf diese Weise können die benötigten Dichtungselemente besonders schnell, einfach und kostengünstig in späteren Produktionsschritten an der Gerippesäule angeordnet bzw. an dieser festgelegt werden.

Dabei hat es sich weiterhin als vorteilhaft gezeigt, dass das Innenkontur- und/oder das Außenkontur- und/oder das Mittelstegteil ein Verbindungselement, insbesondere einen Anschlussknoten, zum Anordnen eines Quer- und/oder Längs- und/oder Diagonalträgers umfasst. Durch das integrierte Verbindungselement, welches beispielsweise als Blechknoten ausgebildet sein kann, können die genannten Anbauelemente zur Aussteifung bzw. Stabilisierung des Gerippes einfach und variabel mit der Gerippesäule verbunden werden, wodurch erhebliche Zeit- und Kosteneinsparungen gegeben sind.

Weitere Gewichts-, Zeit- und Kosteneinsparungen sind dadurch gewährleistet, dass an einem Endbereich der Gerippesäule ein Dacheckknoten und/oder ein Abdichtwinkel vorgesehen ist. Mit Hilfe eines an einem oberen Endbereich der Gerippesäule angeordneten bzw. integrierten Dacheckknotens entfallen die bislang benötigten, zusätzlichen Pressteile oder dergleichen. Alternativ oder zusätzlich können durch ein an einem unteren Endbereich angeordneten Abdichtwinkel die bislang erforderlichen Zusatzbauelemente eingespart werden. Dabei kann insbesondere vorgesehen sein, dass der Dacheckknoten und/oder der Abdichtwinkel einteilig mit dem Innenkontur- und/oder Außenkonturteil ausgebildet ist bzw. sind.

In einer weiteren vorteilhaften Ausgestaltung der Erfindung ist vorgesehen, dass das Innenkontur- und/oder das Außenkonturteil mittels eines Schweißverfahrens, insbesondere eines Langloch- und/oder Kehlnahtschweißverfahrens, mit dem Mittelstegteil verbunden ist. Derartige Schweißverfahren erlauben eine weitgehend automatisierte Herstellung der Gerippesäule mit Hilfe von Schweißrobotem, so dass die Gerippesäule mit hoher und reproduzierbarer Qualität schnell und kostengünstig hergestellt werden kann.

Dabei hat es sich weiterhin als vorteilhaft gezeigt, dass ein Dachspriegel vorgesehen ist, welcher vorzugsweise formschlüssig mit der Gerippesäule verbunden ist. Aufgrund des Wegfalls bislang benötigter Hohlprofilteile, Knotenelemente und dergleichen entfällt der damit verbundene Hohlraum zwischen Gerippesäule und Dachspriegel, wodurch ein übergangsloser Kraftfluss gewährleistet ist. Zusätzlich wird eine Verringerung des Rohbaugewichts des Gerippes bei zusätzlich erhöhter Biegefestigkeit sichergestellt. Der Dachspriegel selbst kann dabei beispielsweise einen analogen Aufbau wie die Gerippesäule aufweisen oder einen Doppel-T-Profilquerschnitt besitzen.

Der Dachrahmen kann dabei formschlüssig mit Gerippesäule und Dachspriegel verbunden sein.

Weitere Vorteile, Merkmale und Einzelheiten der Erfindung ergeben sich aus der nachfolgenden Beschreibung bevorzugter Ausführungsbeispiele sowie anhand der Zeichnungen, in welchen gleiche oder funktionsgleiche Elemente mit identischen Bezugszeichen versehen sind. Dabei zeigen:
- Fig. 1: ein Gerippe eines als Omnibus ausgebildeten Großraumfahrzeugs gemäß dem Stand der Technik;
- Fig. 2: eine schematische Seiten- und Frontalansicht einer Gerippesäule gemäß einem bevorzugten Ausführungsbeispiel;
- Fig. 2a: eine schematische Schnittansicht der Gerippesäule entlang der Schnittlinie IIa;
- Fig. 2b: eine schematische Schnittansicht der Gerippesäule entlang der Schnittlinie IIb;
- Fig. 3: eine schematische Seiten- und Frontalansicht der Gerippesäule gemäß Detail III in Fig. 2;
- Fig. 4: eine schematische Seiten- und Frontalansicht der Gerippesäule gemäß Detail IV in Fig. 2;
- Fig. 5: eine schematische Seiten- und Frontalansicht der Gerippesäule gemäß Detail V in Fig. 2;
- Fig. 6: eine perspektivische Detailansicht eines seitlichen Dachbereichs eines Gerippes eines Großraumfahrzeugs mit einer Gerippesäule und einem Dachspriegel gemäß einem ersten Ausführungsbeispiel; und
- Fig. 7: eine perspektivische Detailansicht des seitlichen Dachbereichs des Gerippes gemäß Fig. 5 mit einer Gerippesäule und einem Dachspriegel gemäß einem zweiten Ausführungsbeispiel.

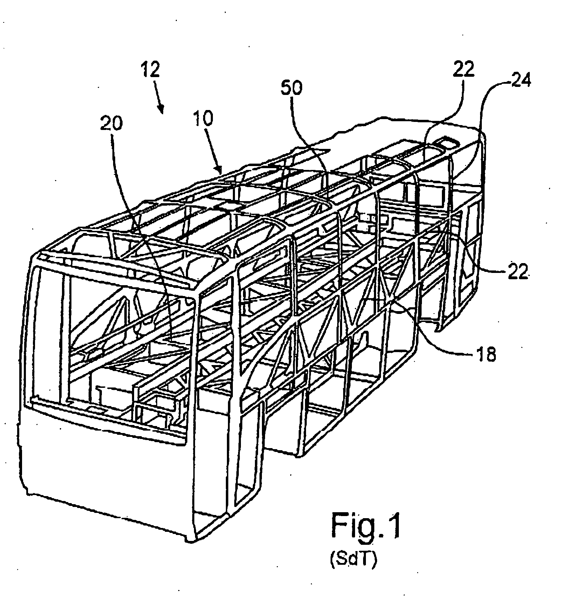

Fig. 1 zeigt ein Gerippe 10 eines als Omnibus ausgebildeten Großraumfahrzeugs 12 gemäß dem Stand der Technik. Das Gerippe 10 dient dabei als Hauptrahmen einer selbsttragenden Karosserie sowie als Träger einer Außenverkleidung bzw. einer Verglasung des Großraumfahrzeugs 12 und umfasst unter anderem eine Mehrzahl miteinander verbundener Gerippesäulen 24 und Querspanten. Diese sind ihrerseits zur Verstärkung des Gerippes 10 über Diagonalträger 18, Querträger 20 und Längsträger 22 bzw. Dachholme miteinander verbunden. Zur Versteifung eines Dachbereichs des Gerippes 10 sind die Gerippesäulen 24 zudem üblicherweise über Hohlprofile (nicht abgebildet) mit jeweils zugeordneten Dachspriegeln 50 verbunden. Die dabei verwendeten Gerippesäulen 24 sind üblicherweise als Hohlprofile, Vierkantrohre, IHU-Teile und dergleichen ausgebildet.
Fig. 2 zeigt eine schematische Seiten- und Frontalansicht einer Gerippesäule 24 gemäß einem bevorzugten Ausführungsbeispiel. Die Gerippesäule 24 ist dabei im Wesentlichen als I-Profil ausgebildet und umfasst ein Innenkonturteil 26 und ein Außenkonturteil 28, welche im vorliegenden Beispiel parallel zueinander angeordnet und über ein Mittelstegteil 30 miteinander verbunden sind. Innenkonturteil 26, Außenkonturteil 28 und Mittelstegteil 30 sind dabei jeweils mittels eines Laserschneidverfahrens aus Blechtafeln geschnitten. Wie leicht erkennbar, kann dabei über die Ausgestaltung des Mittelstegteils 30 die gewünschte seitliche Außen- und Innenkontur des Gerippes bzw. des Großraumfahrzeugs unmittelbar bestimmt werden. Durch variable Ausgestaltung von Innenkonturteil 26, Außenkonturteil 28 und Mittelstegteil 30 können Gerippesäulen 24 mit unterschiedlichen Konturverläufen, Wandstärken und Querschnitten im Rahmen desselben Herstellungsverfahrens bereitgestellt werden, wodurch das Gerippe mit einer hohen Designfreiheit ausgebildet werden kann. Zudem können die jeweiligen Gerippesäulen 24 gewichts- und kostenoptimiert an die jeweiligen Fallungen, Dichtflächen und Blechauflagen angepasst werden.

Die Fig. 2a und 2b zeigen jeweils schematische Schnittansichten der Gerippesäule 24 entlang der Schnittlinie IIa bzw. IIb. Dabei ist insbesondere die Verbindung zwischen Innenkonturteil 26, Außenkonturteil 28 und Mittelstegteil 30 mittels Langloch- 32 und Kehlnahtschweißungen 34 erkennbar. Die Verwendung derartiger Schweißverfahren gewährleistet dabei eine hohe Biegefestigkeit bei gleichzeitiger Gewichtsoptimierung. Mechanisch hoch beanspruchte Bereiche können dabei beispielsweise durch eine entsprechend höhere Schweißpunktdichte berücksichtigt werden.

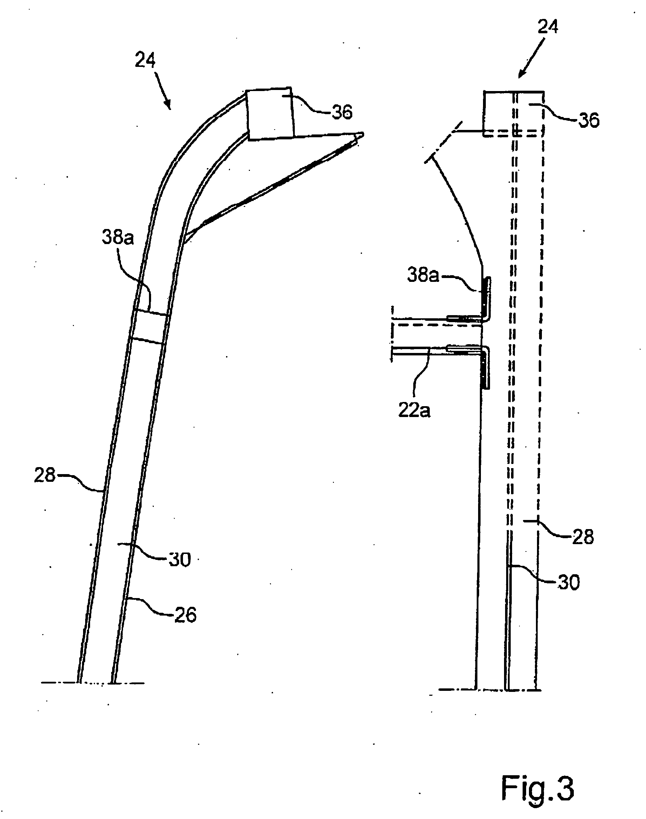

Fig. 3 zeigt eine schematische Seiten- und Frontalansicht der Gerippesäule 24 gemäß Detail III in Fig. 2. Dabei sind insbesondere der im oberen Endbereich integrierte Dacheckknoten 36, welcher als einfache Platte oder Biegeteil ausgebildet sein kann, sowie das als Anschlussknoten für den Längsträger 22a ausgebildete Verbindungselement 38a erkennbar.

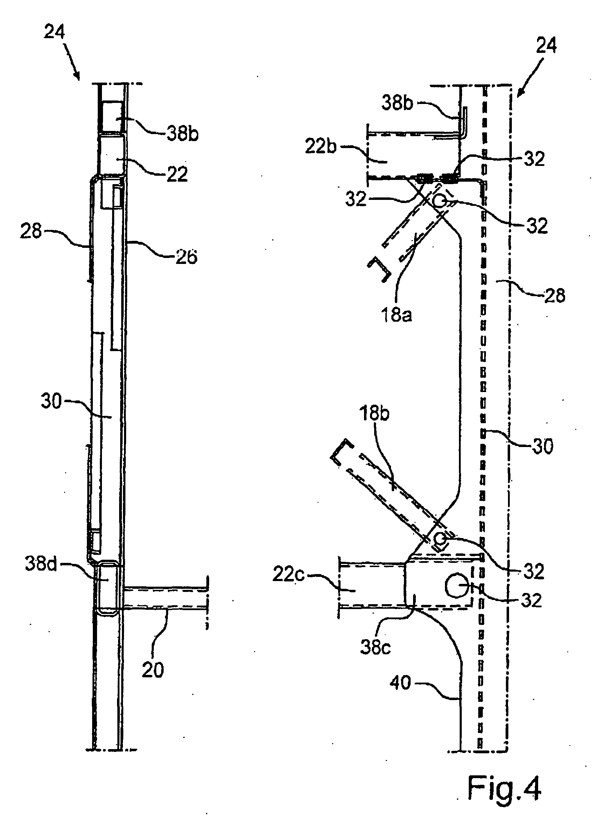

Fig. 4 zeigt eine schematische Seiten- und Frontalansicht der Gerippesäule 24 gemäß Detail IV in Fig. 2. Dabei sind insbesondere die verschiedenen Verbindungselemente 38b, 38c, 38d erkennbar, welche als Knotenelemente zum Anschluss des Querträgers 20 bzw. der Längsträger 22b, 22c ausgebildet sind. Alle Verbindungselemente 38b-d bieten dabei den Vorteil, besonders große Biegemomente aufnehmen zu können. Weiterhin ist das Außenkonturteil 28 mit Diagonalträger 18a, 18b verschweißt, wodurch eine weitere Aussteifung des Gerippes 10 erzielt wird. Die Diagonalträger 18a, 18b sind dabei vorliegend als U-Profile ausgebildet und ermöglichen eine weitere Gewichtseinsparung. Die Verbindungen zwischen der Gerippesäule 24 und den Quer-, Längs- und Diagonalträgern 20, 22, 18 sind im vorliegenden Ausführungsbeispiel mittels Langlochschweißungen 32 bewerkstelligt, wodurch weitere signifikante Zeit- und Gewichtseinsparungen erzielt werden. Das Außenkonturteil 28 umfasst weiterhin einen seitlichen Aufnahmebereich 40 zur Anordnung bzw. zum Festlegen eines zugeordneten Dichtgummis (nicht abgebildet).

Fig. 5 zeigt eine schematische Seiten- und Frontalansicht der Gerippesäule 24 gemäß Detail V in Fig. 2. Dabei sind insbesondere die Langlochschweißungen 32 zwischen dem Außenkonturteil 28 und dem Mittelstegteil 30 erkennbar. Weiterhin ist der am unteren Endbereich der Gerippesäule 24 angeordnete Abdichtwinkel 42 erkennbar, welcher einteilig mit dem Außenkonturteil 28 ausgebildet ist. Dadurch kann im Gegensatz zum Stand der Technik auf zusätzliche seitliche Abdichtwinkel verzichtet werden. Ebenso kann ein Unterbau zur Blechauflage an der Gerippesäule 24 entfallen.

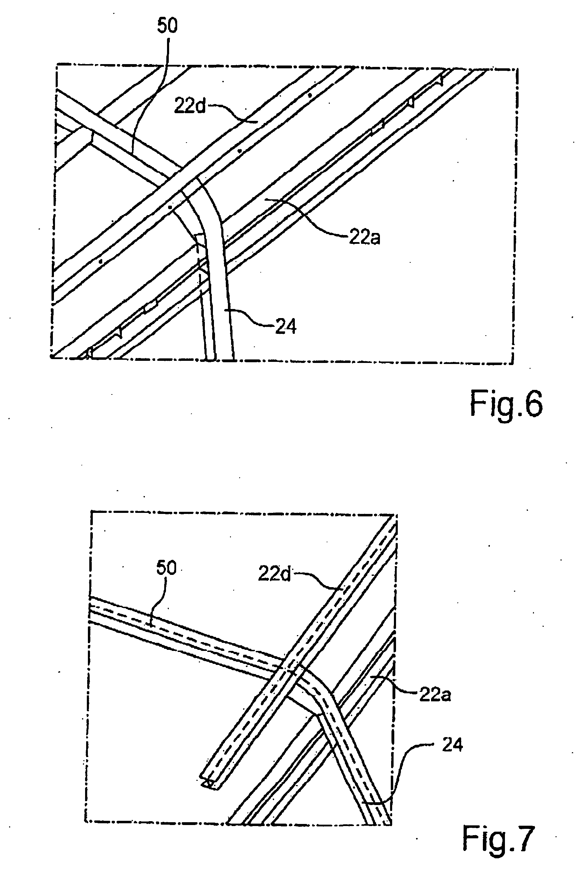

Fig. 6 zeigt eine perspektivische Detailansicht eines seitlichen Dachbereichs eines Gerippes eines Großraumfahrzeugs mit einer Gerippesäule 24 und einem Dachspriegel 50 gemäß einem ersten Ausführungsbeispiel. Die Gerippesäule 24 und der Dachspriegel 50 sind dabei unter Zuhilfenahme eines zusätzlichen Hohlprofilteils miteinander verbunden, so dass zwischen Dachspriegel 50 und Gerippesäule 24 ein Hohlraum entsteht, an welchem der Kraftfluss unterbrochen bzw. umgeleitet wird.

Fig. 7 zeigt eine perspektivische Detailansicht des seitlichen Dachbereichs des Gerippes gemäß Fig. 5 mit einer Gerippesäule 24 und einem Dachspriegel 50 gemäß einem zweiten Ausführungsbeispiel. Gerippesäule 24, Dachspriegel 50 und Längsträger 22d sind jeweils aus Doppel-T-Profilen hergestellt und an ihren Enden formschlüssig miteinander verbunden. Dadurch werden ein übergangsloser Kraftfluss und eine verbesserte Biegesteifigkeit des Gerippes ermöglicht.

## Patentansprüche

1. Gerippesäule (24) für ein Gerippe (10) eines Großraumfahrzeugs (12), insbesondere eines Omnibusses, bei dem diese im Wesentlichen als I-Profil ausgebildet ist und ein Innenkontur- (26) sowie ein Außenkonturteil (28) umfasst, welche über ein Mittelstegteil (30) miteinander verbunden sind,
**dadurch gekennzeichnet,**
**dass** das Innenkontur- (26) und/oder das Außenkontur- (28) und/oder das Mittelstegteil (30) mittels eines thermischen Trennverfahrens, insbesondere eines Laserschneidverfahrens, aus einer Blechtafel ausgeschnitten ist.

2. Gerippesäule (24) nach Anspruch 1,
**dadurch gekennzeichnet,**
**dass** das Innenkontur- (26) und/oder das Außenkonturteil (28) einen Aufnahmebereich (40) und/oder eine Auflagefläche zum Anordnen eines Dichtungselements, insbesondere eines Dichtgummis, umfasst.

3. Gerippesäule (24) nach Anspruch 1 oder 2,
**dadurch gekennzeichnet,**
**dass** das Innenkontur- (26) und/oder das Außenkontur- (28) und/oder das Mittelstegteil (30) ein Verbindungselement (38), insbesondere einen Anschlussknoten, zum Anordnen eines Quer- (20) und/oder Längs- (22) und/oder Diagonalträgers (18) umfasst.

4. Gerippesäule (24) nach einem der Ansprüche 1 bis 3,
**dadurch gekennzeichnet,**
**dass** an einem Endbereich der Gerippesäule (24) ein Dacheckknoten (36) und/oder ein Abdichtwinkel (42) vorgesehen ist.

5. Gerippesäule (24) nach einem der Ansprüche 1 bis 4,
**dadurch gekennzeichnet,**
**dass** das Innenkontur- (26) und/oder das Außenkonturteil (28) mittels eines Schweißverfahrens, insbesondere eines Langloch- (32) und/oder Kehlnahtschweißverfahrens (34), mit dem Mittelstegteil (30) verbunden ist.

6. Gerippesäule (24) nach einem der Ansprüche 1 bis 5,
**dadurch gekennzeichnet,**
**dass** ein Dachspriegel (50) vorgesehen ist, welcher vorzugsweise formschlüssig mit der Gerippesäule (24) verbunden ist.

## Claims

1. A frame column (24) for a frame (10) of a large-capacity vehicle (12), in particular of a bus, in which said frame column is configured essentially as an I-profile and comprises an inner contour (26) as well as an outer contour part (28) which are connected to each other by means of a central traverse (30),
**characterised in that**
the inner contour (26) and/or the outer contour part(28) and/or the central traverse (30) is cut out from a sheet metal panel using a thermal cutting method, in particular a laser cutting method.

2. The frame column (24) according to claim 1,
**characterised in that**
the inner contour (26) and/or the outer contour part (28) comprises a receiving region (40) and/or a bearing face for the arrangement of a sealing element, in particular a sealing rubber.

3. The frame column (24) according to claim 1 or 2,
**characterised in that**
the inner contour (26) and/or the outer contour part (28) and/or the central traverse (30) comprises a connection element (38), in particular a connection node, for the arrangement of a transversal (20) and/or longitudinal (22) and/or diagonal support (18).

4. The frame column (24) according to any one of the claims 1 to 3,
**characterised in that**
a roof corner node (36) and/or a sealing bracket (42) is provided on an end region of the frame column (24).

5. The frame column (24) according to any one of the claims 1 to 4,
**characterised in that**
the inner contour (26) and/or the outer contour part (28) is connected to the central traverse (30) using a welding method, in particular using a slot (32) and/or fillet welding method (34).

6. The frame column (24) according to any one of the claims 1 to 5,
**characterised in that**
a roof bow (50) is provided, which is preferably connected to the frame column (24) in a form-fitting manner.

## Revendications

1. Colonne d'ossature (24) pour une ossature (10) d'un véhicule de grande capacité (12), en particulier d'un omnibus, pour lequel celle-ci est configurée substantiellement comme un profil en I est présente une partie de contours intérieurs (26) ainsi qu'une partie de contours extérieurs (28) qui sont reliées l'une à l'autre par une partie de traverse centrale (30),
**caractérisée en ce**
**que** la partie de contours intérieurs (26) et/ou la partie de contours extérieurs (28) et/ou la partie de traverse centrale (30) est découpée dans une plaque de tôle au moyen d'un procédé de séparation thermique, en particulier d'un procédé de découpe laser.

2. Colonne d'ossature (24) selon la revendication 1,
**caractérisée en ce**
**que** la partie de contours intérieurs (26) et/ou la partie de contours extérieurs (28) comprend une zone de logement (40) et/ou une surface d'appui pour placer un élément d'étanchéité, en particulier un caoutchouc d'étanchéité.

3. Colonne d'ossature (24) selon la revendication 1 ou 2,
**caractérisée en ce**
**que** la partie de contours intérieurs (26) et/ou la partie de contours extérieurs (28) et/ou la partie de traverse centrale (30) comprend un élément de liaison (38), en particulier un noeud de raccord pour placer une entretoise transversale (20) et/ou longitudinale (22) et/ou diagonale (18).

4. Colonne d'ossature (24) selon l'une des revendications 1 à 3,
**caractérisée en ce**
**qu'**un noeud d'angle de toit (36) et/ou un angle d'étanchéité (42) est prévu à une zone d'extrémité de la colonne d'ossature (24).

5. Colonne d'ossature (24) selon l'une des revendications 1 à 4,
**caractérisée en ce**
**que** la partie de contours intérieurs (26) et/ou la partie de contours extérieurs (28) est reliée à la partie de traverse centrale (30) au moyen d'un procédé de soudage, en particulier d'un procédé de soudure de trou oblong (32) et/ou d'un procédé de soudure d'angle (34).

6. Colonne d'ossature (24) selon l'une des revendications 1 à 5,
**caractérisée en ce**
**qu'**il est prévu un arceau de toit (50) qui est relié de préférence à forme finale à la colonne d'ossature (24).
